Europäisches Patentamt

European Patent Office

Office européen des brevets

(19)

(11) Veröffentlichungsnummer: **0 046 462**

**A1**

(12) **EUROPÄISCHE PATENTANMELDUNG**

(21) Anmeldenummer: **80105032.9**

(22) Anmeldetag: **25.08.80**

(51) Int. Cl.³: **G 01 L 1/04**
**G 01 G 3/16**

(43) Veröffentlichungstag der Anmeldung:
**03.03.82 Patentblatt 82/9**

(84) Benannte Vertragsstaaten:
**AT BE CH DE FR GB IT LI NL SE**

(71) Anmelder: **WIRTH, GALLO & CO**
**Sonnenbergstrasse 55**
**CH-8032 Zürich(CH)**

(72) Erfinder: **Wirth, Johannes**
**Sonnenbergstrasse 55**
**CH-8032 Zürich(CH)**

(72) Erfinder: **Gallo, Mario**
**Krönleinstrasse 1**
**CH-8044 Zürich(CH)**

(54) **Massen- und Kraftmessgerät.**

(57) Massen- und Kraftmessgerät mit einem Gestell (1), einem Lastträger (2), einer Kraftmesszelle (4) und einem zwischen Gestell (1) und Lastträger (2) angeordneten Zwischenkörper (3), bei welchem der Lastträger (2) sich über eine Anzahl von Belastungspunkten (10a, 10b) auf den Zwischenkörper (3) und dieser über die gleiche Anzahl von Stützpunkten (9a, 9b) auf das Gestell (1) stützt, welche Belastungs- und Stützpunkte sich paarweise in einer horizontalen Ebene befinden, welcher Zwischenkörper (3) aus zwei starren, durch zwei horizontale, untereinander angeordnete, biegsame Teile (6) verbundenen Teilen (5) besteht, an denen die Belastungs- und Stützpunkte angebracht sind, wobei die Belastungspunkte (10a, 10b) um den gleichen Betrag und in der gleichen Richtung bezüglich der Stützpunkte (9a, 9b) versetzt angeordnet sind, ferner ist mindestens eine Feder (8) vorgesehen, deren Biegsamkeit grösser als diejenige der genannten biegsamen Teile (6) ist, die an einem Ende in einem der starren Teile des Zwischenkörpers (3) eingespannt und am anderen Ende mit der mit dem anderen starren Teil des Zwischenkörpers verbundenen Kraftmesszelle (4) verbunden ist.

Fig. 1

EP 0 046 462 A1

## Massen- und Kraftmessgerät

Die vorliegende Erfindung bezieht sich auf ein Massen- und Kraftmessgerät mit einem Gestell, einem Lastträger, einer Kraftmesszelle und einem zwischen Gestell und Lastträger angeordneten Zwischenkörper, bei welchem der Lastträger sich über eine Anzahl von Belastungspunkten auf den Zwischenkörper und dieser über die gleiche Anzahl von Stützpunkten auf das Gestell stützt, welche Belastungs- und Stützpunkte sich paarweise in einer horizontalen Ebene befinden.

Geräte dieser Gattung sind z.B. aus dem Europäischen Patent ... ... (Anm. 79200252.8) bekannt. Sie weisen einen elastisch verformbaren Zwischenkörper auf, der zwischen dem Lastträger und dem Gestell angeordnet ist. Dieser Zwischenkörper wird durch die Last bzw. die durch die belastenden und stützenden Kräfte hervorgerufenen Momente verformt. Ueber passende Federn werden die durch diese Verformung erzeugten Kräfte auf eine starre Kraftmesszelle übertragen, deren Ausgangssignale in bekannter Weise ausgewertet werden. Das Ergebnis der Messung wird dann weiter verarbeitet und/oder angezeigt. Solche Geräte eignen sich in einer Vielfalt von Anwendung an Stelle der herkömmlichen Lenkerbrücken.

Unter starren Kraftmesszellen versteht man Vorrichtungen, bei welchen die zu messende Kraft auf deren Krafteingang derart einwirkt, dass praktisch nur virtuelle Bewegungen der Elemente der Kraftmesszelle vorkommen.

<u>Fall 137</u>

C-Brücke

In dem erwähnten bekannten Gerät wird jedoch die als Mass für die zu messende Grösse dienende Vorformung des Zwischenkörpers über zwei senkrechte Federn übertragen, wodurch die Gesamtbauhöhe bestimmt wird. Soll auf Grund der Anwendung diese Bauhöhe klein gehalten werden, so ist es nicht möglich die Länge dieser Federn beliebig zu verkürzen, da ihre virtuelle Einfederung zu klein werden würde. Um sie in der Kraftmesszelle noch zuverlässig verwenden zu können, müssten an der Unveränderlichkeit der Geometrie des ganzen Gerätes derartige Anforderungen gestellt werden, dass der entsprechende Aufwand prohibitiv wäre.

Die der Erfindung zu Grunde liegende Aufgabe besteht darin, bei Geräten der erwähnten Gattung eine Art der Belastung des Zwischenkörpers und der Uebertragung seiner Verformung auf die Kraftmesszelle zu schaffen, die eine kleine Bauhöhe ohne ausserordentliche Bedingungen für die Geometrie des Gerätes zu erfordern, erlaubt.

Erfindungsgemäss wird diese Aufgabe dadurch gelöst, dass der Zwischenkörper aus zwei starren, durch zwei horizontale, untereinander angeordnete, biegsame Teile verbundenen Teilen besteht, dass die Belastungs- und Stützpunkte an diesen starren Teilen angebracht sind, wobei die Belastungspunkte um den gleichen Betrag und in der gleichen Richtung bezüglich der Stützpunkte versetzt angeordnet sind, dass mindestens eine Feder, deren Biegsamkeit grösser als diejenige der genannten biegsamen Teile ist, an einem Ende in einem der starren Teile des Zwischenkörpers eingespannt und am anderen Ende mit der mit dem anderen starren Teil des Zwischenkörpers verbundenen Kraftmesszelle verbunden ist.

Diese Ausbildung erlaubt es, eine Untersetzung der zu messenden Grösse ohne zusätzliche, diesbezügliche Mittel zu erwirken. Je nach Gestaltung der Zwischenkörper kann die dieser Grösse entsprechende, auf die Kraftmesszelle wirkende, sogenannte Messkraft in gewünschtem Verhältnis zu dieser Grösse gehalten werden.

In der beiliegenden Zeichnung sind Ausführungsbeispiele des Erfindungsgegenstandes schematisch dargestellt.
Es zeigen:

Fig. 1    ein erstes Ausführungsbeispiel,

Fig. 2    den Zwischenkörper der Fig. 1 im Belastungszustand,

Fig. 3    ein zweites Ausführungsbeispiel,

Fig. 4    in schaubildlicher Ansicht eine Variante der Ausführung des Zwischenkörpers, und

Fig. 5    einen Grundriss zu Fig. 4.

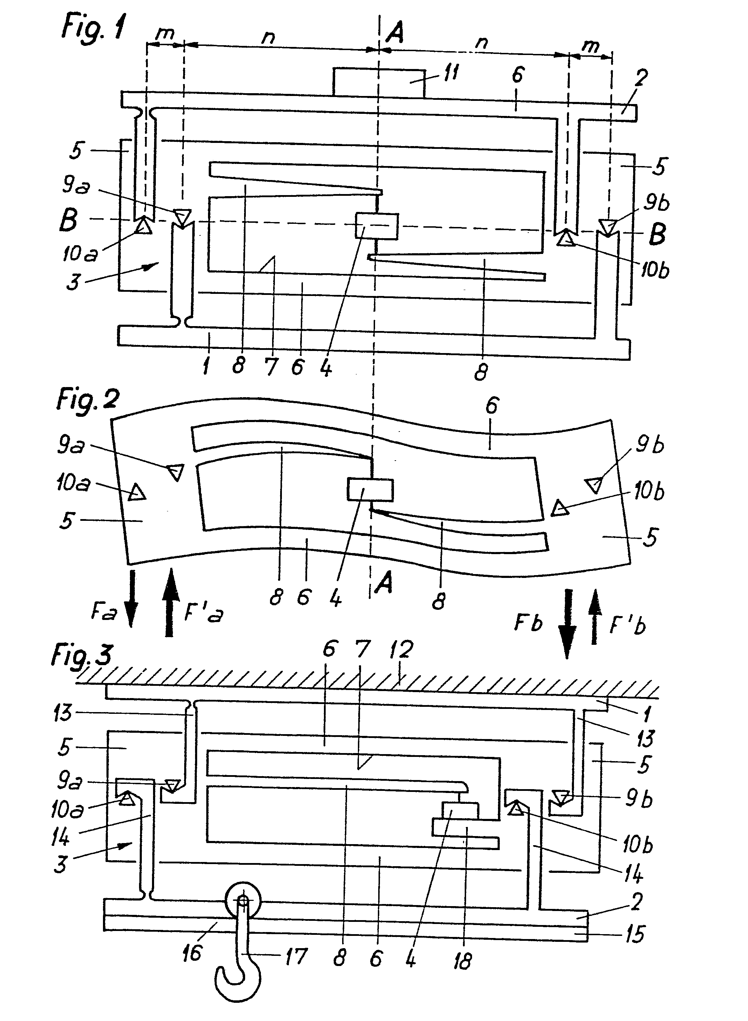

Das in Fig. 1 schematisch dargestellte Gerät weist ein Gestell 1, einen Lastträger 2, einen Zwischenkörper 3 und eine starre Kraftmesszelle 4 auf. Der Einfachheit halber hat man weder das Auswertungsgerät, in welchem die Ausgangssignale der Kraftmesszelle 4 verarbeitet werden, noch die Anzeigevorrichtung dargestellt.

Der Zwischenkörper 3 besteht aus zwei gleichen, starren Teilen 5, die durch zwei parallele, horizontale, untereinander angeordnete, gleiche, biegsame Teile 6 verbunden sind. In seiner Mitte weist der Zwischenkörper 3 eine viereckige Oeffnung 7 auf, in welcher sich zwei Federn 8 erstrecken, deren Biegsamkeit gegenüber derjenigen der Teile 6 sehr gross ist. Diese Federn 8 bestehen aus einem Stück mit dem Zwischenkörper 3. Ihre Enden sind mit der Kraftmesszelle 4 verbunden. Dieser Zwischenkörper 3 kann beispielsweise durch Stanzen einer Metallplatte hergestellt werden. Die Symmetrieebene des Zwischenkörpers 3, genannt neutrale Ebene, ist die Ebene der Zeichnung, die senkrechte Symmetrieebene normal zu dieser neutralen Ebene ist durch die Linie AA angedeutet.

Der Zwischenkörper 3 weist zwei Stützschneiden 9a, 9b und zwei Belastungsschneiden 10a, 10b auf, die sich alle in der mittleren horizontalen Ebene BB des Zwischenkörpers 3 befinden. Die Belastungsschneiden 10a bzw. 10b sind um den gleichen Betrag m beide links von den Stützschneiden 9a bzw. 9b versetzt angeordnet. Ferner ist der Abstand n der Stützschneide 9a von der Symmetrieebene AA gleich dem Abstand der Belastungsschneide 10b von dieser Symmetrieebene AA. Diese Belastungs- und Stützschneiden 10a, 10b, 9a und 9b liegen symmetrisch auf beiden Seiten der neutralen Ebene. Sie sind in den Zwischenkörper 3 eingepresst und ragen beidseitig aus.

Da die Federn 8 wesentlich biegsamer sind als die Teile 6 kann ihr Anteil am Verhalten des Zwischenkörpers 3 unter Belastung vernachlässigt werden.

Wird eine Masse 11 auf den Lastträger 2 zentral aufgelegt, so wird der Zwischenkörper 3 asymmetrisch belastet. Die zwei Stützschneiden 9a, 9b und die zwei Belastungsschneiden 10a, 10b werden ihren unterschiedlichen Abständen (m+n) und n von der Symmetrieebene AA entsprechend ungleich belastet. In Folge der beschriebenen Anordnung ist jedoch die Kraft Fb die auf die Belastungsschneide 10b wirkt gleich und entgegengesetzt der Rückwirkungskraft F'a des Gestelles 1 auf die Stützschneide 9a. Das Gleiche gilt für die Kräfte F'b und Fa, die auf die Stützschneide 9b bzw. auf die Belastungsschneide 10a wirken.

Unter der Wirkung dieser vier äusseren Kräfte bleibt der Zwischenkörper 3 im Gleichgewicht, da die algebraische Summe dieser Kräfte sowie der von ihnen erzeugten Momente null ist. Denkt man sich den Zwischenkörper 3 entlang der Symmetrieebene AA in zwei Teile geschnitten, so wäre jede der zwei Hälften unter der Einwirkung der äusseren Kräfte Fb, F'a bzw. Fa, F'b nicht im Gleichgewicht. Um dieses herzustellen, bedarf es einer senkrecht nach unten gerichteten Kraft für die linke Hälfte und einer gleichen, nach oben rerichteten Kraft für die rechte Hälfte. Wegen der Gleichheit der Teile 6 sind diese zwei Kräfte gleichmässig auf diese zwei Teile 6 verteilt. Unter zentraler Belastung sind also die Belastungen dieser beiden Teile 6 gleich und bestehen in jedem Querschnitt jedes Teiles 6 aus einer konstanten, senkrechten Kraft und einem in Funktion des Abstandes der Ebene AA linear veränderlichen Moment um eine Achse quer zur neutralen Ebene. Die Verformung des Zwischenkörpers 3 ist S-förmig und besteht aus einem linearen und einem quadratischen Anteil. Entlang der Teile 6 wirken keine horizontalen Kräfte.

Unter der Belastung der Masse 11 verschieben sich also die Teile 5 einander gegenüber in senkrechter Richtung. Wegen ihrer lageschlüssig verbundenen Enden, müssen sich die Federn 8 entsprechend verbiegen. Die Versetzung ihrer mit der Kraftmesszelle 4 verbundenen Enden mit Bezug auf ihre anderen Enden ist je gleich der Hälfte der relativen Versetzung der Teile 5. Die von diesen Federn 8 auf die

- 5 -

0046462

Kraftmesszelle 4 geübten Kräfte sind ein Mass für die Grösse der Masse 11.

Wird diese Masse 11 exzentrisch gelegt, so ist die Belastung des Zwischenkörpers 3 die gleiche wie bei zentraler Lage der Masse 11 zuzüglich zweier gleicher und entgegengesetzter, auf die Belastungsschneiden 10a und 10b wirkender Kräfte. Diese Kräfte erzeugen ein Moment, sodass, um das Gleichgewicht des Zwischenkörpers 3 wieder herzustellen, die Stützschneiden 9a, 9b ein gleiches und entgegengesetztes Moment erzeugen müssen. Da jedoch der Abstand m zwischen den Stütz- und Belastungsschneiden 9a, 10a bzw. 9b, 10b der gleiche ist, sind die zusätzlichen Stützkräfte gleich und entgegengesetzt den erwähnten zusätzlichen Lastkräften. Die durch diese zusätzlichen Kräfte paarweise erzeugten Momente gleichen sich aus in Form einer konstanten Zugkraft in einem der Teile 6 und einer gleich grossen Druckkraft im anderen Teil 6. Die entsprechende relative Verdrehung der Teile 5 verursacht nur eine entsprechende relative Verdrehung der in diesen Teilen 5 eingespannten Enden der Federn 8. Die zentral angeordnete Kraftmesszelle 4 wird also durch die Zug- und Druckkräfte in den Teilen 6 nicht beeinflusst.

In Fig. 3 ist ein zweites Ausführungsbeispiel dargestellt, bei welchem das Gestell 1 an einer Decke 12 befestigt ist. Der Zwischenkörper 3 hängt am Gestell 1 mittels Gehänge 13 und der Lastträger 2 hängt am Zwischenkörper 3 mittels Gehänge 14. Er weist eine Schiene 15 für eine Rolle 16 auf, an welcher ein Haken 17 für die Last angebracht ist. In diesem Ausführungsbeispiel ist die Kraftmesszelle 4 in einem Ausleger 18 des Zwischenkörpers 3 eingespannt. Sie wird von einer einzigen Feder 8 belastet.

Bei zentraler Belastung des Lastträgers 2 verhält sich das Gerät wie mit Bezug auf Fig. 1, 2 beschrieben. Bei asymmetrischer Belastung des Lastträgers 2 entstehen ebenfalls relative Verdrehungen des Fusses der Feder 8 dem Ausleger 12 gegenüber. Um den entstehenden, zur Längskoordinate der Last proportionalen Messfehler zu kompensieren, muss der Abstand m der Schneidenpaare 9a, 10a einerseits und 9b, 10b andererseits entsprechend justiert werden. Da die Längsverformung der Teile 6 sehr viel kleiner ist als ihre Biegeverformung, beträgt diese Justierung wenige Promille. Mit anderen Worten können die Abstände m der Schneidenpaare stets als gleich betrachtet werden.

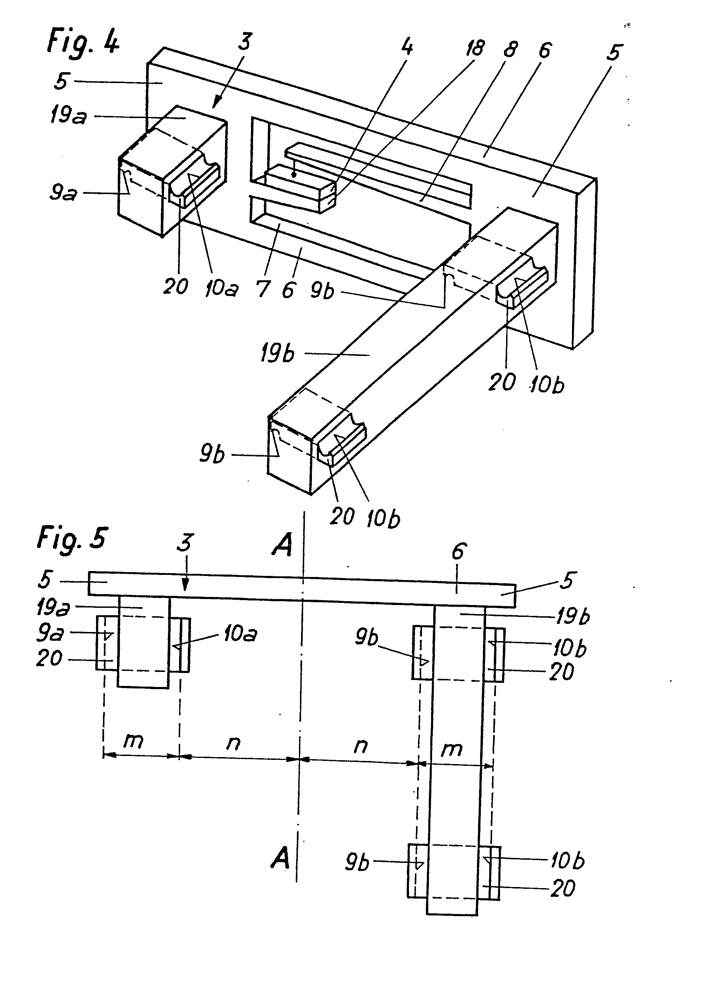

In Fig. 4 und 5 ist eine Variante der Ausführung des Zwischenkörpers 3 dargestellt, bei welcher die Schneidenpaare nicht symmetrisch zur neutralen Ebene angeordnet sind. An den Teilen 5 sind starre Röhren 19a und 19b senkrecht zur neutralen Ebene angebracht. Das Rohr 19a ist mit einem Schneidenträger 20 mit je einer Stützschneide 9a und einer Belastungsschneide 10a versehen. Das Rohr 19b ist mit zwei solchen Schneidenträgern 20 mit je einer Stützschneide 9b und einer Belastungsschneide 10b versehen.

Die einseitige Belastung des Zwischenkörpers 3 erzeugt ein parasitäres Torsionsmoment um eine zentrale, horizontale Achse in der neutralen Ebene. Dies führt zu keinem Fehler, so fern die Kraftmesszelle 4 und die Feder 8 in der gleichen senkrechten Ebene wie die Teile 6 angeordnet sind. Auch in diesem Fall muss der Abstand zwischen der Stützschneide 9a und der Belastungsschneide 10a justiert werden.

Man könnte auch eine Ausführung mit vier Schneidenpaaren vorsehen, d.h. mit zwei identischen Röhren 19a und 19b mit je zwei Schneidenpaaren. Diese Röhren könnten durch entsprechende Schmiede- oder Gussteile oder durch volle Profile ersetzt werden.

In allen Ausführungsbeispielen sind die Federn 8 als aus einem Stück mit dem Zwischenkörper 3 bestehend dargestellt, weil dies aus herstellungstechnischen Gründen zweckmässig ist. Diese Federn könnten aber durch andere Befestigungsmethoden in den Teilen 5 eingespannt werden. Sie könnten auch, wie die Kraftmesszelle 4, unterhalb oder oberhalb der Oeffnung 7 angeordnet werden.

Auch die Teile 6 müssen nicht unbedingt aus einem Stück mit den Teilen 5 bestehen. Es genügt, dass sie in diesen beiderends eingespannt sind. Sie müssen nicht identisch sein.

Auch die Schneiden könnten durch elastische Gelenke oder druck- und zugfähige Bänder ersetzt werden. In den Ausführungsbeipielen

liegen alle Schneiden in der mittleren, horizontalen Ebene BB. Sie
können aber auch paarweise, d.h. jeweils eine Stützschneide mit
der zugeordneten Belastungsschneide, in verschiedenen horizontalen
Ebenen liegen.

Die zur Anwendung kommenden Kraftmesszellen sind nicht näher beschrieben, da es sich um bekannte Vorrichtungen handelt. Sie weisen
alle mindestens einen Krafteingang auf. Man könnte z.B. Dynamometer
bekannter Bauart, Dehnungsmessstreifen, Massen- oder Kraftmesser
mit einer oder mehreren schwingenden Saiten oder dergl. verwenden.
In der einfachsten Ausführung könnte die Kraftmesszelle z.B. aus
einer einzigen schwingenden Saite bestehen, deren Frequenzvariationen unter Belastung im nicht dargestellten Auswertungsgerät verwertet und als Mass der zu ermittelnden Grösse dienen würden.

PATENTANSPRUECHE

1) Massen- und Kraftmessgerät mit einem Gestell, einem Lastträger einer Kraftmesszelle und einem zwischen Gestell und Lastträger angeordneten Zwischenkörper, bei welchem der Lastträger sich über eine Anzahl von Belastungspunkten auf den Zwischenkörper und dieser über die gleiche Anzahl von Stützpunkten auf das Gestell stützt, welche Belastungs- und Stützpunkte sich paarweise in einer horizontalen Ebene befinden, dadurch gekennzeichnet, dass der Zwischenkörper aus zwei starren, durch zwei horizontale, untereinander angeordnete, biegsame Teile verbundenen Teilen besteht, dass die Belastungs- und Stützpunkte an diesen starren Teilen angebracht sind, wobei die Belastungspunkte um den gleichen Betrag und in der gleichen Richtung bezüglich der Stützpunkte versetzt angeordnet sind, dass mindestens eine Feder, deren Biegsamkeit grösser als diejenige der genannten biegsamen Teile ist, an einem Ende in einem der starren Teile des Zwischenkörpers eingespannt und am anderen Ende mit der mit dem anderen starren Teil des Zwischenkörpers verbundenen Kraftmesszelle verbunden ist.

2) Massen- und Kraftmessgerät nach Anspruch 1, dadurch gekennzeichnet, dass die Kraftmesszelle in einem Ausleger eines der starren Teile eingespannt ist.

3) Massen- und Kraftmessgerät nach Anspruch 1, dadurch gekennzeichnet, dass die Kraftmesszelle über eine im genannten anderen starren Teil eingespannte zweite Feder, deren Biegsamkeit grösser als die Biegsamkeit der genannten biegsamen Teile ist, mit diesem starren Teil verbunden ist.

4) Massen- und Kraftmessgerät nach Anspruch 1, dadurch gekennzeichnet, dass an jedem starren Teil ein starres Rohr normal zur Ebene dieser Teile angebracht ist, das mindestens einen Stütz- und einen Belastungspunkt aufweist.

Fig. 1

m  n  A  n  m

11  6  2

5  5

9a  9b

B  B

10a  10b

3

1  8  7  6  4  8

Fig. 2

6

9a  9b

10a  10b

5  5

8  6  4  A  8

Fa  F'a  Fb  F'b

Fig. 3

6  7  12

13  1

5  13

9a  5

10a  9b

14  10b

3  14

2

16  17  8  6  4  18  15

Fig. 4

5
19a
9a
3
4
18 8 6
5
20 10a 7 6 9b
19b
9b
20 10b
20 10b

Fig. 5

5
19a
9a
20
3
A
10a
6
9b
5
19b
10b
20

m    n    n    m

A
9b
10b
20

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 857 524 (WIRTH, GALLO & CO.) | 1 |
| | * Zusammenfassung; Seite 4, Fig. 1 * | |
| | -- | |
| A,D | EP - A1 - 0 005 881 (A. KUUS) | 1 |
| | * Ansprüche 1 bis 3; Zusammenfassung * | |
| | -- | |
| A | EP - A2 - 0 003 222 (WIRTH, GALLO & CO.) | 1 |
| | * Anspruch 1 * | |
| | -- | |
| A | DE - B - 1 958 976 (WIRTH, GALLO & CO.) | 1 |
| | * Ansprüche 1, 5, 7 * | |
| | ---- | |

**KLASSIFIKATION DER ANMELDUNG (Int. Cl.³)**

G 01 L 1/04

G 01 G 3/16

**RECHERCHIERTE SACHGEBIETE (Int. Cl.³)**

G 01 G 3/00

G 01 G 21/16

G 01 L 1/00

G 01 L 5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 25-02-1981 | BOTTERILL |

EPA form 1503.1 06.78